# EUROPEAN PATENT APPLICATION

(11) **EP 3 372 299 A1**
(43) Date of publication of application: **12.09.2018**
(21) Application number: 16862333.8
(22) Date of filing: 26.10.2016
(51) Int. Cl.: B01D 53/86, B01D 53/94, B01J 21/06, B01J 23/22, B01J 23/30, B01J 23/28, B01J 35/04

(54) **SUPPORT INTERFACIAL PORE-CONCENTRATED EMBEDDED TYPE SCR CATALYST STRUCTURE**

(30) Priority: 02.11.2015 KR 20150153003
(71) Applicant: Heesung Catalysts Corporation, Siheung-si, Gyeonggi-do 15088 (KR)
(72) Inventor: HAN, Hyun-sik, Seoul 05612 (KR); LEE, Tae-woo, Ansan-si Gyeonggi-do 15473 (KR); AHN, Neung-Gyun, Siheung-si Gyeonggi-do 15039 (KR)
(74) Representative: Regimbeau
(86) International application number: PCT/KR2016/012038
(87) International publication number: WO 2017/078317

(57) **Abstract**

This invention relates to a support-interfacial-pore-concentratedly-embedded SCR (Selective Catalytic Reduction) catalyst structure, and particularly to a support-interfacial-pore-concentratedly-deposited or -embedded SCR catalyst structure, suitable for use in the treatment of exhaust gas having high sulfur content, in which a catalytically active material is concentratedly deposited into the interfacial pores in the support and does not substantially exist on the inner wall of the support and in the support other than the interface of the support, for example, in the core of the support.

## Description

### Technical Field

The present invention relates to a support-interfacial-pore-concentratedly-embedded SCR (Selective Catalytic Reduction) catalyst structure, and more particularly to a support-interfacial-pore-concentratedly-deposited or -embedded SCR catalyst structure, suitable for use in the treatment of exhaust gas having high sulfur content, in which a catalytically active material is concentratedly deposited into the interfacial pores in the support and does not substantially exist on the inner wall of the support and in the support other than the interface of the support, for example, in the core of the support.

### Background Art

Typically, SCR systems for controlling the discharge of nitrogen oxide have been utilized in various fields of industry, multi-purpose boilers, engines and furnaces. SCR systems are useful in decreasing the discharge of nitrogen oxide from exhaust gas of boilers, engines and furnaces. When briefly described, in such systems, ammonia (or a reducing agent such as urea, etc.) is sprayed into the exhaust gas flow of a boiler containing a catalyst. Ammonia functions to reduce a large amount of nitrogen oxide in exhaust gas so that nitrogen oxide is converted into water and nitrogen. Since the catalyst for removing nitrogen oxide for use in SCR systems is expensive, stoichiometric control of an exhaust gas/ammonia/catalyst reaction is preferably required. Such a catalytically active material, such as a material for removing nitrogen oxide, is supported to a support made of a fire-resistant inorganic material or metal material.

Among catalysts for use in SCR systems, a coated catalyst is configured such that a honeycomb support made of a ceramic or metal material is coated with an active material. Briefly, a monolithic support having fine parallel gas flow passages extending therethrough from an inlet or an outlet of the honeycomb support may be used, and the passages are open such that a fluid flows therethrough. The passages, which are substantially straight from the fluid inlet to the fluid outlet, are coated with a washcoat as a catalytically active material and the exhaust gas flowing through the passages is brought into contact with the applied catalyst material. The flow passages in the monolithic support may be provided in the form of channels having thin inner walls, with any suitable cross-sectional shape and size, such as a trapezoidal shape, a rectangular shape, a square shape, a sine curve shape, a hexagonal shape, an oval shape, or a circular shape. Such a structure may have at least about 10 to 900 gas inflow ports (cells) per square inch of the cross-section thereof.

The present applicant has developed a support-pore-embedded SCR catalyst structure (Patent No. 1,336,597). The pore-embedded SCR catalyst structure, suitable for use in the treatment of nitrogen oxide of exhaust gas having high sulfur content, includes a support and a catalytically active material, the catalytically active material being deposited only into the pores in the support, and not substantially existing on the inner wall of the support.

### Disclosure

### Technical Problem

However, the performance of the pore-embedded SCR catalyst has been found to decrease depending on the flow rate of exhaust gas through the passages in the support. Specifically, as the rate at which exhaust gas passes through the passages increases, the likelihood of passing through pores in the support is lowered, and thus the efficiency of the support-pore-embedded SCR catalyst structure, in which the catalytically active material is substantially deposited only into the pores in the support, is decreased. Moreover, the expensive catalytically active material is also present in the inner deep portion of the support, which does not come into contact with exhaust gas, undesirably increasing material costs.

### Technical Solution

The present invention has been devised to solve the problems with conventional support-pore-embedded SCR catalyst structures for use in the treatment of exhaust gas having high sulfur content, and the present invention provides a support-interfacial-pore-concentratedly-deposited or -embedded SCR catalyst structure, in which a catalytically active material is concentratedly deposited into the interfacial pores in the support and substantially does not exist on the inner wall of the support and in the support other than the interface of the support. Without limitation thereto, in the support-interfacial-pore-concentratedly-deposited or -embedded SCR catalyst structure according to the present invention, the support has a honeycomb shape with a porosity of 20% to 80%, and may include cordierite, silicon carbide, cordierite-α-alumina, silicon nitride, zircon mullite, spodumene, alumina-silica-magnesia, zircon silicate, sillimanite, magnesium silicate, zircon, petalite, α-alumina, or aluminosilicate. Preferably useful is cordierite. In the support-interfacial-pore-concentratedly-deposited SCR catalyst structure according to the present invention, the catalytically active material deposited into the support may include, but is not limited to, vanadium series comprising vanadium oxide (V₂O₅) and tungsten oxide (WO₃) or molybdenum oxide (MoO₃) added to titanium oxide (TiO₂), zeolite series, or base metal oxides.

### Advantageous Effects

In the support-interfacial-pore-concentratedly-embedded SCR catalyst structure according to the present invention, even when the flow rate of exhaust gas through the passages in a support is increased, effective contact between exhaust gas and a catalytically active component becomes possible, thus solving the low performance problems with a conventional pore-embedded SCR catalyst and obviating the need to load an expensive catalytically active material in the core of the support, which does not come into contact with exhaust gas, ultimately lowering material costs and improving processing efficiency.

### Description of Drawings

FIG. 1 schematically shows the reaction in a conventional embedded SCR catalyst structure and an interfacial-pore-concentratedly-embedded SCR catalyst structure according to the present invention;
FIG. 2 shows video microscopy images of the cross-sections of a conventional embedded SCR catalyst structure and an interfacial-pore-concentratedly-embedded SCR catalyst structure according to the present invention; and
FIG. 3 shows graphs of the comparison results of SCR catalytic activity of a conventional embedded SCR catalyst structure and an interfacial-pore-concentratedly-embedded SCR catalyst structure according to the present invention.

### Best Mode

According to the present invention, a support-interfacial-pore-concentratedly-embedded SCR catalyst structure is configured such that a catalytically active material is concentratedly deposited to interfacial pores in a support and does not substantially exist on the surface of the inner wall of the support and in the support other than the interface of the support, for example, in the core of the support.

### Definition

As used herein, the term "interfacial" or "interface" refers to a contact surface between the inner wall of a support (or a carrier) and the pores (or passages) formed in the support. The term "interfacial pores" refers to pores in the inner wall of the support, which are present in the interface, and in the present invention, pores in the inner wall of the support present within 20% of the thickness of the inner wall are defined as interfacial pores. However, depending on the porosity of the support itself, the interfacial pores within the range of 20% to 50% of the thickness of the inner wall will be able to be understood by those skilled in the art. As used herein, the term "deposited" or "embedded" means that a catalytically active material penetrates into the interfacial pores formed in the support and is thus loaded in the pores, and the catalytically active material is not substantially loaded in the support other than the interfacial pores.

### Construction

In order to deposit the catalytically active material into the support so as to achieve the purpose of the present invention, a porosity, which is a ratio of the pore volume relative to the total volume of the support, preferably falls in the range of 20% to 80%. If the porosity is less than 20%, the inner wall of the support cannot be coated with the catalytically active material. In contrast, if the porosity exceeds 80%, mechanical strength may decrease. Thus, the porosity of the support is preferably set within the range of 40% to 70%, and more preferably 50% to 65%. In order to minimize a drop in pressure while exhaust gas discharged from power plants or marine diesel engines passes through the catalyst, the support is preferably provided in the form of a honeycomb. When the honeycomb configuration, which will be readily apparent to those skilled in the art, is schematically described, it has parallel gas flow passages extending therethrough from an inlet or an outlet of the support. As such, the passages are opened at the inlet and the outlet and are thus provided in the form of channels that are open paths that are substantially straight from the gas inlet to the gas output, the channels being defined by thin inner walls.

The support according to the present invention is formed of a ceramic material able to impart high porosity, including cordierite, silicon carbide, cordierite-α-alumina, silicon nitride, alumina-silica-magnesia, zircon silicate, sillimanite, magnesium silicate, zircon, petalite, α-alumina, or aluminosilicate. Preferably useful is cordierite. The catalytically active material is deposited into multiple pores in the support. The material deposited into the support may include, but is not limited to, vanadium series comprising vanadium oxide (V₂O₅) and tungsten oxide (WO₃) or molybdenum oxide (MoO₃) added to titanium oxide (TiO₂), zeolite series, or base metal oxides.

A method of preparing the interfacial-pore-concentratedly-embedded SCR catalyst according to the present invention is capable of quantifying the catalytically active material so as not to exist on the surface of the inner wall of the support and so as to prevent the catalytically active material from penetrating into the core of the support other than the interfacial pores in the support, whereby the catalytically active material is substantially completely deposited into the interfacial pores in the support and does not substantially exist on the surface of the inner wall of the support, as in conventional embedded SCR catalyst preparation methods. Specifically, a conventional embedded SCR catalyst is prepared by quantifying a catalytically active slurry so as to form a thick coating layer on the inner wall of the support, whereas the interfacial-pore-concentratedly-embedded SCR catalyst according to the present invention is obtained by quantifying a catalytically active slurry so that the catalytically active material may substantially completely penetrate only into the interfacial pores in the support, immersing the porous support in the slurry and then performing firing. The embedded SCR catalyst according to the present invention may be easily prepared through steps of (a) measuring the porosity of a support, (b) determining the properties (particle size, viscosity, amount) of a catalytically active slurry so as to be completely deposited only into the interfacial pores in the support, (c) depositing the catalytically active slurry into the support, and (d) calcining the catalyst obtained in (c). The quantitative deposition process in step (c) may be achieved according to Korean Patent No. 1,271,434 (Metered weight coater for precise PM control), by the present applicant.

However, the method of preparing the interfacial-pore-concentratedly-deposited or -embedded SCR catalyst according to the present invention may be performed in various manners. Without limitation thereto, the properties of the catalytically active slurry are changed, and thus the catalytically active component may be concentratedly loaded only in the interfacial pores. For example, a process of increasing viscosity may be devised. Also, processing factors during the coating process, for example, time, pressure, and the like, are adjusted, whereby the catalytically active component may be deposited only into the interfacial pores. Furthermore, a barrier layer for the core of the support is formed using a thermoplastic polymer material on a portion of the inner wall, and the slurry is loaded only in the interfacial pores, after which the polymer material is combusted during the calcination process, thereby obtaining a catalyst structure in which the active component is embedded only in the interfacial pores.

### Best aspects

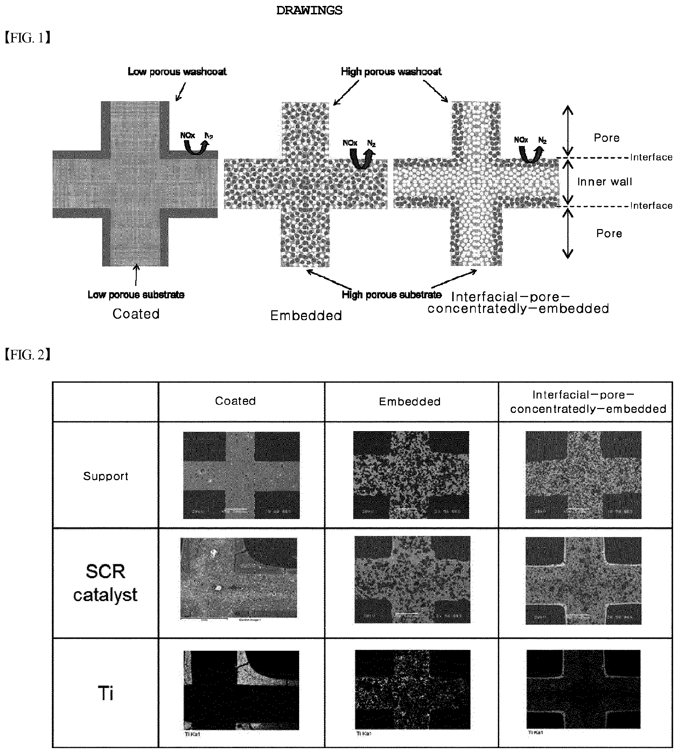

FIG. 1 schematically shows the reaction using a conventional embedded SCR catalyst structure and an interfacial-pore-concentratedly-embedded SCR catalyst structure according to the present invention. The conventional embedded SCR catalyst structure may be defined as a dispersedly embedded type compared to the interfacial-pore-concentratedly-embedded type according to the present invention. The support used in the present invention is a highly porous support, for example, a cordierite honeycomb-shaped support (having a diameter of 1 inch, a length of 2 inches, and 46 cpsi), in which the catalytically active component may be substantially completely deposited using a coating device. As shown in FIG. 1, the dispersedly deposited catalyst is configured such that a washcoat (a catalytically active component) is completely deposited into the support, and thus the washcoat does not substantially exist on the inner wall of the support. In contrast, the interfacial-pore-concentratedly-embedded catalyst of the present invention is configured such that the catalytically active component is concentratedly applied at a predetermined thickness only to the interfacial pores in the inner wall of the support. Thus, the catalytically active component is concentratedly applied only into the interfacial pores in the support, and is not deposited in the core of the support, whereby problems with the conventional dispersedly embedded catalyst, such as low performance, high material costs and low processing efficiency, may be solved.

FIG. 2 shows the images of distribution of the catalytically active material (Ti) in the dispersedly embedded catalyst (middle) and the concentratedly embedded SCR catalyst (right) according to the present invention when using a cordierite support having a porosity of 55%. As shown in the right images, the catalytically active component is concentratedly applied only to the interfacial pores. In the middle sample, the catalytically active component is applied at a dry gain (D/G) of 100g/L, and in the right sample, 100 g/L of the catalytically active component is applied to the cordierite support having a porosity of 55%, and is thus concentratedly supported only in the interfacial pores. Most catalytically active components are substantially penetrated into the interfacial pores in the support and thus do not substantially exist on the surface thereof.

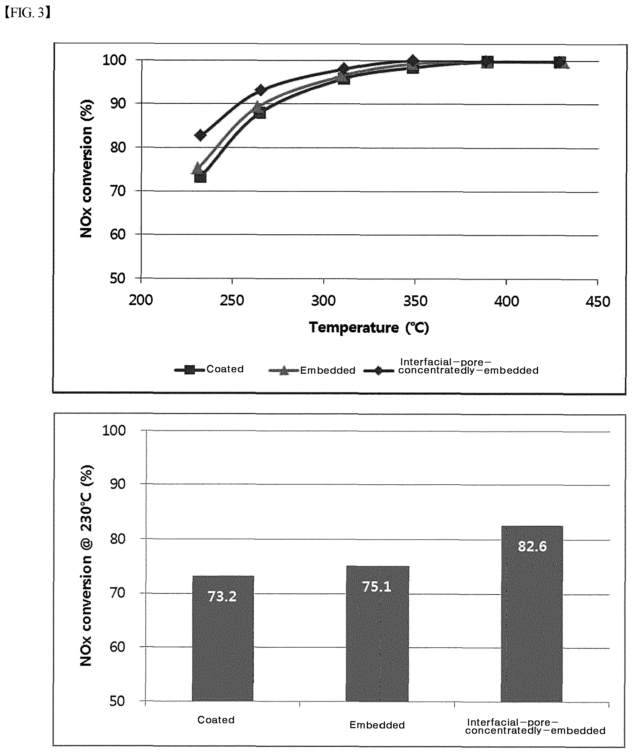

FIG. 3 shows graphs of the comparison results of the activity of the conventional dispersedly embedded SCR catalyst (green) and the interfacial-pore-concentratedly-embedded SCR catalyst of the present invention (blue). Each catalytically active component was 3% V₂O₅/TiO₂, and was deposited at a dry gain of 100 g/L in the cordierite support (46 cpsi) having a porosity of 55%. The conditions for evaluation of the activity of these catalysts were as follows: a space velocity (SV) of 21,000/hr and a supply gas comprising 400 ppm NO and 400 ppm NH₃. As shown in FIG. 3, the performance of the interfacial-pore-concentratedly-embedded catalyst was superior in the low-temperature range, at which the catalytic performance is affected by pore diffusion, compared to the conventional catalyst.

## Claims

1. A support-interfacial-pore-concentratedly-embedded SCR (Selective Catalytic Reduction) catalyst structure, suitable for use in treatment of nitrogen oxide of exhaust gas, comprising a support and a catalytically active material, wherein the catalytically active material is concentratedly deposited into interfacial pores in the support and does not substantially exist on an inner wall of the support and in the support other than an interface of the support.

2. The support-interfacial-pore-concentratedly-embedded SCR catalyst structure of claim 1, wherein the interfacial pores are pores present within 50% of a thickness of the inner wall of the support.

3. The support-interfacial-pore-concentratedly-embedded SCR catalyst structure of claim 1 or 2, wherein the support has a porosity ranging from 20% to 80%.

4. The support-interfacial-pore-concentratedly-embedded SCR catalyst structure of claim 1 or 2, wherein the support has a honeycomb shape.

5. The support-interfacial-pore-concentratedly-embedded SCR catalyst structure of claim 1 or 2, wherein the support is selected from the group consisting of ceramic materials, including cordierite, silicon carbide, cordierite-α-alumina, silicon nitride, zircon mullite, spodumene, alumina-silica-magnesia, zircon silicate, sillimanite, magnesium silicate, zircon, petalite, α-alumina, and aluminosilicate.

6. The support-interfacial-pore-concentratedly-embedded SCR catalyst structure of claim 1, wherein the catalytically active material is selected from the group consisting of vanadium series comprising vanadium oxide (V₂O₅) and tungsten oxide (WO₃) or molybdenum oxide (MoO₃) added to titanium oxide (TiO₂), zeolite series, and base metal oxides.
